# EUROPEAN PATENT APPLICATION

(11) **EP 0 613 766 A1**
(43) Date of publication of application: **07.09.1994**
(21) Application number: 94830089.2
(22) Date of filing: 25.02.1994
(51) Int. Cl.: B29C 65/66

(54) **A method for producing a cover plate for white goods**

(30) Priority: 02.03.1993 IT RM930130
(71) Applicant: Pellegrino, Giuseppe, I-80128 Napoli (IT)
(72) Inventor: Pellegrino, Giuseppe, I-80128 Napoli (IT)
(74) Representative: Fiammenghi-Domenighetti, Delfina

(57) **Abstract**

The cover plate for white goods, which is the object of this invention, is formed by a frame (1, 2, 3) inside which a rectangular or square panel (4) is blocked.

The frame comprises four vertical lateral walls (1) having a horizontal upper edge (2) which blocks the panel (4) inside the frame (1, 2, 3) when the plastic material which forms the frame (1, 2, 3) has shrunk to its final size, said frame being removed from the injection moulding press when it is still hot. The frame comprises also a horizontal plane (3) which connects to each other the vertical lateral walls (1) of the frame (1, 2, 3), and which supports the panel (4).

The method comprises a step in which the frame (1, 2, 3) is removed from the press by means of a robot-manipulator which places it on a plane. A second robot-manipulator inserts the panel (4) inside the frame and said panel remains blocked in the latter after shrinking of the material which forms the frame (1, 2, 3).

## Description

The present invention relates to a method for producing a cover plate for white goods, and particularly to a method which takes advantage of the shrinking property of the plastic material which forms the frame of the cover plate, in order to fit a decorative sight-exposed panel inside said frame.

Several methods are known for realizing covers for white goods, in which said covers are formed by a frame and a counterframe made up by a plurality of strips which are fitted to the sides of the frame. The way in which the strips are fitted to the frame is rather complicated.

According to a method provided by the applicant for producing a cover of the aforesaid kind, various steps are required, that is: the seizing - by means of a robot or mechanical hand - of the frame, which is still warm, from the automatic press, the rotation of the frame by a predetermined angle, performed by the mechanical hand, the turning over of the frame by an angle of 180° through a tilter or manipulator, the insertion of the panel inside the frame, and the fitting of the strips to the frame itself in order to block the panel; in order to fix the strips more properly in the ensemble formed by the frame and the counterframe, a station is provided in which needles are introduced through the fins of the strips, until they penetrate into the panel. Furthermore, in order to facilitate the fitting of the strips on the sides of the frame, a forming station is provided, for the forming of the lateral walls of every side of the frame.

This method, like other conventional methods, as for example the fixing of the panel to the frame by means of adhesives, are rather complicated, and in some cases they cause problems due to scrapping of the rejections and to pollution caused by the use of adhesives. Moreover this scrap is not recoverable because the worked materials, once they have been gluid together, cannot be separated.

Another object of the present invention is that of realizing a cover plate for white goods which comprises only a frame (without counter-frame) and a panel, said frame being able to block in a non-removable way, the panel which had been inserted inside it, due to shrinking of the plastic material by which it is formed, so that there will be no need of strips or centering teeth on the internal side walls of the frame. Moreover, since the cover plate is tray-like and monolithic, it is closed at the bottom and therefore it is perfectly sealed. Therefore, since the strips are no more employed, also the fabrication method is largely simplified.

The above mentioned objects will be attained as disclosed in the following description, which illustrates the method of the present invention and the associated product, and as defined by the claims at the end of the description.

The drawings show:
Fig. 1, a vertical cross section of one end of the frame and panel, while the panel is being inserted on the plane of the frame, at the time when the material by which the frame is formed has not yet shrunk;
Fig. 2, a vertical cross-section of one end of the frame, after the shrinking of the plastic material, with the panel blocked inside the frame;
Fig. 3, the form of the frame according to a cross-sectional view, without the panel, on a reduced scale with respect to Figs. 1 and 2.

With reference to the figures, the plastic frame is realized in a first step of the method, this frame being formed by four lateral vertical walls 1 which define a square or a rectangle, and which have a horizontal edge 2 (preferably a continuous one).

The horizontal plane 3 of the frame is square or rectangular and connects together the four vertical walls 1 of the square or rectangular frame.

The frame is realized by an injection moulding automatic press.

A first robot-manipulator picks up the still warm frame from the press and places it on a working table (not shown).

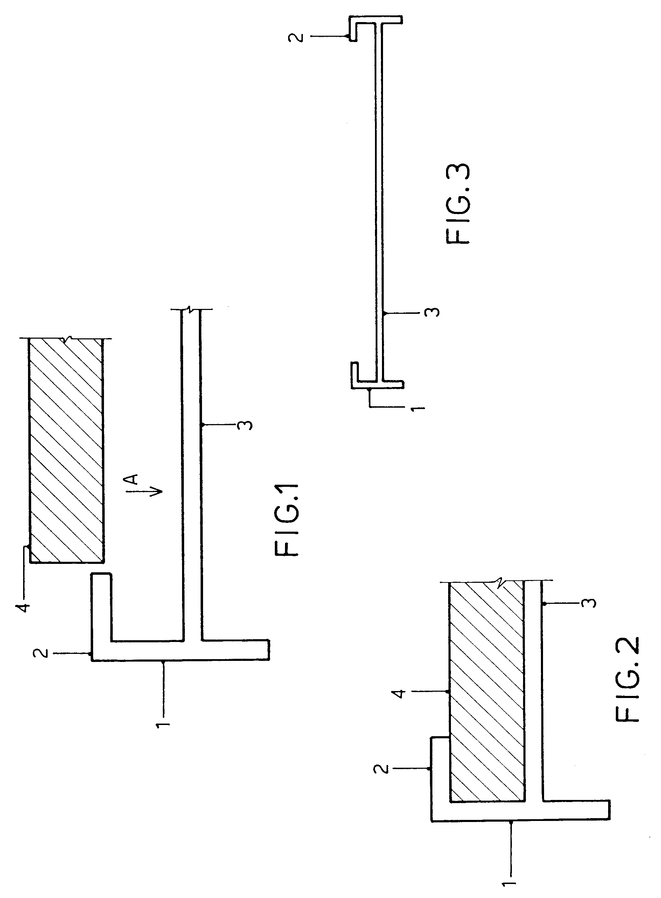

As shown in Fig. 1, the panel 4 is placed by a second robot-manipulator on the horizontal plane 3 (in the direction of the arrow A) which is integral with the lateral vertical walls 1 of the frame.

After cooling and shrinking of the plastic material which forms the frame, the horizontal edge 2 is superimposed with respect to the edge of the panel 4, as shown in Fig. 2, and the vertical walls 1 of the frame will touch the edges of the panel. At this time the panel 4 is completely inserted inside the frame.

Before packing, the cover plate for white goods may be placed for example on a very slow belt conveyor, which allows the cover plate to arrive at the packing station after shrinking of the frame, that it when the panel is completely blocked between the lateral walls 1 of the frame.

## Claims

1. A method for producing a cover plate for white goods, characterized in that it comprises the following steps:
- removal of the frame of the cover plate from the injection moulding automatic press by means of a first robot-manipulator, and arrangement of said plastic frame on a working table;
- arrangement of a panel (4) between the sides of the frame (1, 2, 3) and on a horizontal plane (3) connecting the lateral vertical walls (1) of the frame, by means of a second robot-manipulator, on the side of said horizontal plane (3) in which the vertical walls (1) of the frame form a horizontal edge (2);
- waiting period, until said horizontal edge (2) of the frame, due to shrinking of the material forming the frame (1, 2, 3), is superimposed to the edge of the panel (4) on the opposite side of it with respect to the horizontal plane (3) and the vertical lateral walls (1) of the frame touch the edge of the panel, permanently blocking the latter inside the frame (1, 2, 3).

2. A method for producing a cover plate for white goods, characterized in that said first robot-manipulator carries out a rotation of a predetermined angle of its mechanical hand, preferably of 90°, in order to place said plastic frame on a horizontal working table and to allow the second robot-manipulator to insert the panel inside the frame.

3. A cover plate for white goods, produced according to the method of claims 1 and 2, characterized in that it comprises a frame and a panel (4), said frame being rectangular or square and comprising four vertical lateral walls (1), a horizontal edge (2) at the upper end of said vertical walls (1) which is superimposed to the edge of the panel (4) blocked inside the frame, and a horizontal supporting plane (3) for the panel (4), which connects to each other the four vertical lateral walls (1) of the frame, at a point located substantially in the middle between the two ends of said lateral vertical walls (1).

4. A cover plate for white goods according to claim 3, characterized in that the horizontal edge (2) of the frame is discontinuous.
